# EUROPÄISCHE PATENTSCHRIFT

(11) **EP 0 528 503 B1**
(45) Veröffentlichungstag und Bekanntmachung des Hinweises auf die Patenterteilung: **20.09.1995**
(21) Anmeldenummer: 92250193.7
(22) Anmeldetag: 21.07.1992
(51) Int. Cl.: H01R 25/16, H01H 1/42

(54) **Trennkontaktanordnung für einen verschiebbaren Geräteträger**
Disconnecting arrangement for a slidable apparatus-support
Dispositif sectionneur pour support d'appareil coulissant

(30) Priorität: 20.08.1991 DE 4127708
(43) Veröffentlichungstag der Anmeldung: 24.02.1993
(73) Patentinhaber: SIEMENS AKTIENGESELLSCHAFT, 80333 München (DE)
(72) Erfinder: Feuerbach, Manfred, W-6000 Frankfurt 60 (DE); Rössler, Karl-Heinz, W-6457 Maintal 1 (DE)

(56) Entgegenhaltungen:
- DE-B- 1 040 102
- GB-A- 375 285
- GB-A- 2 189 088
- US-A- 4 121 067

## Beschreibung

Die Erfindung betrifft eine Trennkontaktanordnung für einen entlang Führungsteilen verschiebbar angeordneten Geräteträger zur lösbaren Verbindung auf dem Geräteträger befindlicher Schaltgeräte mit ortsfest angeordneten einspeisenden und/oder abgehenden Leitern und mit folgenden Merkmalen:
- Je Phase ist wenigstens eine bewegbare Kontakteinheit, bestehend aus einem isolierenden Gehäuse und zwei in dem Gehäuse relativ zueinander bewegbar angeordneten Kontakthebeln, vorhanden;
- die Kontakthebel sind im wesentlichen parallel zueinander angeordnet und besitzen an jeweils einem Ende eine, bezogen auf die parallele Stellung der Kontakthebel, außenliegend angeordnete Kontaktfläche;
- für das Zusammenwirken mit den Kontakthebeln sind zwei ortsfeste und parallel zueinander angeordnete Gegenkontaktstücke vorgesehen, zwischen welche die Kontakthebel einführbar sind.

Eine Trennkontaktanordnung dieser Art ist beispielsweise durch die NL-Firmendruckschrift HOLEC: "Schalt- und Verteilerschränke ... CAPITÔLE", Druckschrift Nr. 12-445 31.181, bekanntgeworden. Die Kontakthebel sind dabei an ihren gegenüberliegenden Enden mit Anschlußkontaktflächen versehen, die im Unterschied zu den anderen Kontaktflächen innenliegend angeordnet sind, derart, daß die Kontakthebel gabelartig ein schienenartiges Kontaktstück übergreifen können. Eine scherenartige Kreuzung der Kontakthebel bewirkt bei der Einführung eines solchen Kontaktstückes zwischen die innenliegenden Kontaktflächen eine Spreizung der außenliegenden Kontaktflächen am gegenüberliegenden Ende der Kontakthebel und damit eine gewünschte Kontaktkraft. In einem etwa mittig gelegenen Bereich beider Kontakthebel entsteht beim Fließen hoher Ströme, insbesondere von Kurzschlußströmen, eine anziehende Kraft, welche eine an den Kontaktstellen auftretende Kraft wenigstens kompensiert.

Die Gestaltung der bekannten Kontakthebel erfordert eine Herstellung als Stanz-Biegeteil, was gegenüber einem nur durch Stanzen hergestellten Teil einen höheren Aufwand erfordert. Ferner bedingt die scherenartige Anordnung der zusammenwirkenden Kontakthebel eine die Kontakthebel durchsetzende Gelenk- und Federanordnung. Da auch die Anschlußkontaktflächen mit einer Stromschiene zusammenwirken, ist die Beweglichkeit der Kontakthebel relativ zu den Gegenkontaktstücken beschränkt.

Der Erfindung liegt hiervon ausgehend die Aufgabe zugrunde, eine Trennkontaktanordnung mit vereinfachter Herstellbarkeit zu schaffen, die auch bei abweichender Stellung der Kontakthebel zu den ortsfesten Gegenkontaktstücken, d. h. bei einem Fluchtungsfehler, funktionsfähig ist und die vom Benutzer leicht an unterschiedliche Nennströme anpaßbar ist.

Gemäß der Erfindung wird diese Aufgabe durch folgende weitere Merkmale erreicht:
- jeder Kontakthebel besitzt eine etwa rechteckige Ausnehmung;
- an dem isolierendem Gehäuse der Kontakteinheit ist ein Widerlager zum Eingreifen in die Ausnehmungen der Kontakthebel vorgesehen und
- die Kontakthebel sind durch eine nur an den Kontakthebeln abgestützte Feder unter Spreizung der Kontaktflächen nach außen gegeneinander vorgespannt.

Das Widerlager an dem isolierenden Gehäuse legt in der vorgesehenen Anordnung nicht nur die Kontakthebel in der Richtung der Verschiebung der Kontakteinheit fest, sondern ermöglicht auch eine gewisse Schwenkung beider Kontakthebel in dem Gehäuse als Ausgleich einer Fluchtungstoleranz zwischen der Kontakteinheit und den ortsfesten parallelen Kontaktstücken.

Die Kontakthebel sind als reine Stanzteile herstellbar. Sie werden spiegelbildlich paarweise montiert und durch die als reines Biegeteil herstellbare Feder vorgespannt. Da das Widerlager zwischen den Kontakthebeln aufgenommen wird, können Paare von gegeneinander gefederten Kontakthebeln mit zugehörigen Widerlagern durch einfache Kraftanwendung in Eingriff gebracht werden. Dies gibt dem Benutzer die Möglichkeit, eine Trennkontaktanordnung nach Bedarf mit einer gewünschten Anzahl von Kontaktteilen zu versehen. Die gesamte Anordnung zeichnet sich durch Einfachheit, Unempfindlichkeit gegen übliche Maßabweichungen und durch Beständigkeit ihrer Eigenschaften über lange Zeiträume aus.

Das zum Ausgleich einer Fluchtungstoleranz zwischen den Kontakthebeln und dem ortsfesten Gegenkontaktstück erwünschte Spiel kann in vorteilhafter Weise dadurch bewirkt werden, daß die paralleln Kontakthebel nahe ihren Enden Anlageflächen zur gegenseitigen Abstützung besitzen und daß im Ruhestand zwischen dem Widerlager und den Ausnehmungen ein Spiel vorhanden ist. Die gegeneinander vorgespannten Kontakthebel können somit ohne Richtkraft und ohne nennenswerte Reibung um das Widerlager geschwenkt werden. Die den Kontaktflächen nähergelegenen Anschlagflächen wirken außerdem als Wälzflächen bei der relativen Schwenkbewegung der Kontakthebel, wenn diese in die Gegenkontaktstücke eingreifen. Dies ist günstig für die Güte der Kontaktgabe, die nicht nur von den Eigenschaften der Kontaktflächen abhängt, sondern auch von Lager- und Reibungskräften, welche die Kontaktkraft vermindern. Da eine Wälzbewegung nahezu reibungsfrei erfolgt, beeinflußt sie die Kontaktkraft nicht nennenswert.

Das Widerlager hat im wesentlichen die Aufgabe, bei der Betätigung der Trennkontaktanordnung Druck- bzw. Zugkräfte auf die Kontakthebel zu übertragen. Um bei einer kleinen Fläche eine relativ große Kraft sicher übertragen zu können, empfiehlt es sich, daß die Ausnehmung jedes Kontakthebels an ihrer dem kontaktseitigen Ende des Kontakthebels zugewandten Seite zur Bildung einer Hinterschneidung durch eine winklig angeordnete Fläche begrenzt ist und daß das gehäuseseitige Widerlager der Ausnehmung einschließlich der Hinterschneidung angepaßt gestaltet ist.

Die mit der vorstehend beschriebenen winklig angeordneten Fläche jedes Kontakthebels zusammenwirkende Seite des Widerlagers kann von zwei nach außen gewölbten zylindrischen Teilflächen sowie einer diese Teilflächen verbindenden mittigen Teilfläche mit gegensinniger Wölbung begrenzt sein. Die spezifische Beanspruchung der Flächen kann auf diese Weise auf einen Wert gesenkt werden, der auch von üblichen Kunststoffen ertragen wird.

Um das bedarfsweise Einsetzen von Kontakthebel-Paaren in ein zugehöriges isolierendes Gehäuse zu erleichtern, kann jeder Kontakthebel nahe seinem mit der Kontaktfläche versehenen Ende anschließend an die dort vorgesehene Anlagefläche eine spitzwinklig zu der Längsrichtung des Kontakthebels stehende Schrägfläche besitzen. Durch die Keilwirkung dieser Schrägflächen beim Auftreffen auf das Widerlager werden die Kontakthebel gespreizt, bis das Widerlager in die Ausnehmungen gelangt.

Wird nach einer weiteren Ausgestaltung der Erfindung an dem Gehäuse ausgehend von dem Widerlager eine sich in der Richtung der Anschlußkontaktflächen der Kontakthebel erstreckende Rippe angeordnet, so wird die zur Spreizung der Kontakthebel benötigte Kraft noch verringert. Gleichzeitig wird das Widerlager versteift bzw. zusätzlich abgestützt.

Wie schon erwähnt, kann durch eine geeignete Gestaltung des Widerlagers und der Ausnehmungen der Kontakthebel für eine relativ geringe Beanspruchung des Materials gesorgt sein. Dies kann zur Vereinfachung der Herstellung des Gehäuses ausgenutzt werden, indem das Widerlager und die hiervon ausgehende Rippe als Verbindung paralleler, die Kontakthebel führender Gehäusewände ausgebildet werden.

Nach einer weiteren Ausgestaltung der Erfindung kann die Stromtragfähigkeit der Trennkontaktanordnung dadurch gesteigert werden, daß wenigstens eine der Gehäusewände mit etwa parallel Zur Längsrichtung der Kontakthebel verlaufend angeordneten Führungsleisten für die Kontakthebel versehen ist, die nur einen Teil der Breitseite der Kontakthebel bedecken. Von den verbleibenden Flächen kann die im Betrieb entstehende Wärme durch vorbeiströmende Luft abgeführt werden. In Verbindung hiermit kann die den Führungsleisten gegenüberliegende Gehäusewand eben gestaltet und den Führungsleisten in einem Abstand gegenüberstehend angeordnet sein, welcher der Dicke der Kontakthebel einschließlich einer an ihnen anliegenden Biegefeder entspricht. Da die Biegefeder gleichfalls nur einen Teil der Oberfläche der Kontakthebel bedeckt, bestehen auch hier gute Bedingungen für die Kühlung.

Als Stromzuführung bzw. als Stromableitung kann an der Anschlußkontaktfläche jedes Kontakthebels ein biegsamer Leiter befestigt sein. Die biegsamen Leiter üben bei geeigneter Gestalt und Beschaffenheit keine störende Richtkraft auf die Kontakthebel aus und sind zur Verbindung mit Schaltgeräten vielseitig einsetzbar. Beispielsweise können die Trennkontaktanordnungen verschiebbar auf dem Träger der Gerätekombination angeordnet und mittels der biegsamen Leiter bei ruhendem Träger betätigt werden.

Die isolierenden Gehäuse für mehrere Kontakteinheiten können zu einem einstückigen Trennkontaktträger zusammengefaßt sein. Auf diese Weise ist es möglich, einen für die meisten vorkommenden Aufgaben geeignet bemessen Trennkontaktträger zu verwenden, der lediglich zur Anpassung an die zu beherrschenden Ströme mit einer entsprechenden Anzahl von Paaren von Kontakthebeln versehen wird.

Als ortsfester Gegenkontakt der Trennkontaktanordnung ist eine U-förmige Profilschiene besonders geeignet, weil diese am einfachsten die Einhaltung des Abstandes der Kontaktflächen gewährleistet, mit denen die Kontakthebel zusammenwirken. U-förmige Profilschienen sind für Zwecke der vorliegenden Art bereits bekannt (vgl. die eingangs erwähnte Firmendruckschrift).

Die Erfindung wird im folgenden anhand des in den Figuren dargestellten Ausführungsbeispieles näher erläutert.

Die Figur 1 zeigt schematisch einen Geräteträger mit einer Trennkontaktanordnung in einer perspektivischen Ansicht.

In der Figur 2 ist eine mehrpolige Trennkontaktanordnung in einer teilweise geschnittenen Seitenansicht dargestellt.

Die Figur 3 zeigt einen Trennkontaktträger der Trennkontaktanordnung gemäß der Figur 2 von unten ohne Trennkontakte.

Die Figur 4 zeigt in größerem Maßstab eine Kontakteinheit im Ruhezustand in einer Seitenansicht.

In der Figur 5 ist in einer der Figur 4 entsprechenden Darstellung eine Kontakteinheit im Zustand des Eingriffes mit einer ortsfesten Stromschiene gezeigt.

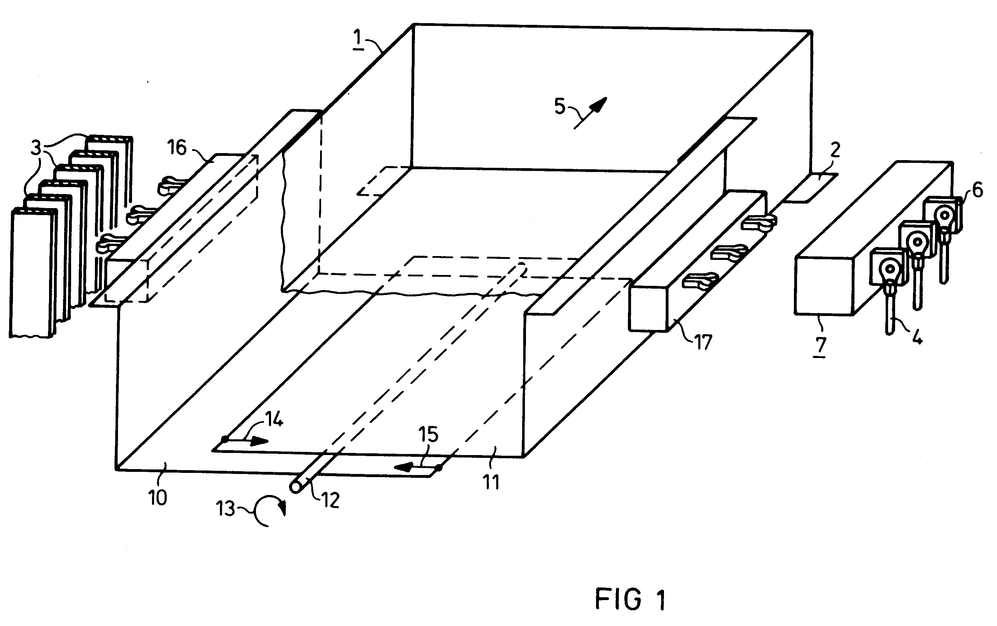

Der in der Figur 1 gezeigte Geräteträger 1 besitzt seitliche Führungsstege 2 zum Einführen in entsprechende ortsfeste Gegenstücke in einen Schaltschrank oder einer Schaltanlage. Die auf dem Geräteträger 1 unterzubringenden Schaltgeräte, Steuer- und Meßgeräte sind nicht dargestellt, da sie zum Verständnis der Erfindung nicht erforderlich sind. Es sei nur erwähnt, daß derartige Geräteanordnungen, beispielsweise für Motorschaltschränke, allgemein bekannt sind. Die erwähnten Schaltgeräte liegen im Leitungszug zwischen einspeisenden Sammelschienen 3 und abgangsseitigen Leitungen oder Kabeln 4, die der linken bzw. rechten Seite des Geräteträger zugeordnet sind. Die Sammelschienen 3 sind in der durch einen Pfeil 5 gekennzeichneten Bewegungsrichtung des Geräteträgers 1 beim Einfahren in die Schaltanlage hintereinanderliegend angeordnet. Ebenso sind die abgangsseitigen Kabel 4 auf der rechten Seite des Geräteträgers 1 ortsfest hintereinanderliegend angeordnet. Bei der Darstellung in der Figur 1 wird davon ausgegangen, daß je zwei Sammelschienen 3 einer Phase zugeordnet sind. Mit den Kabeln 4 in Verbindung stehende Anschlußstücke 6 sind in einem ortsfesten Trennkontaktblock 7 befestigt.

Auf dem Geräteträger 1 befindet sich eine aus zwei gegenläufig verschiebbaren Schlitten 10 und 11 bestehende Anordnung, für deren gleichzeitige Betätigung eine an der Frontseite des Geräteträgers 1 zugängliche Welle 12 vorgesehen ist. Eine Drehung der Welle 12 im Sinne des Pfeiles 13 bewirkt eine gegenläufige Bewegung der Schlitten 10 und 11 in Richtung der Pfeile 14 und 15 mittels nicht dargestellter, jedoch allgemein bekannter Mittel. Geeignet sind beispielsweise aus einem Ritzel und Zahnstangen oder aus einer Baskülscheibe und Treibstangen bestehende Anordnungen.

Die Bewegung der Schlitten 10 und 11 relativ zu dem Geräteträger 1 dient der Betätigung von Trennkontaktanordnungen. Diese sind für die Einspeisung aus den Sammelschienen 3 als feststehender Teil und aus einem Trennkontaktblock 16 als beweglicher Teil gebildet. Für den Abgang sind der feststehende Trennkontaktblock 7 und ein bewegbarer Trennkontaktblock 17 vorgesehen.

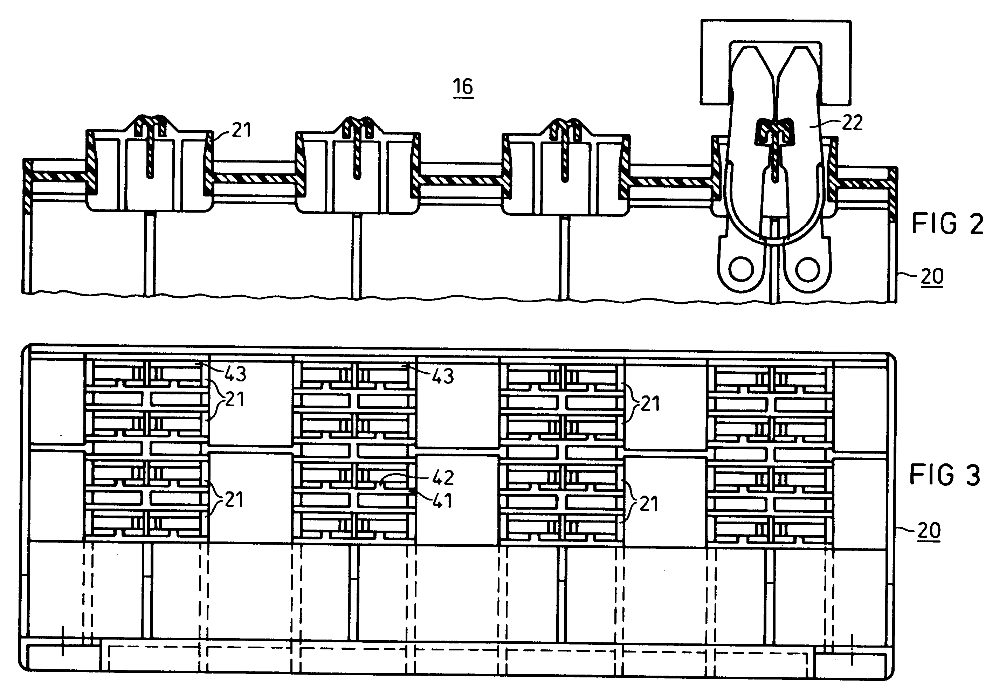

Einzelheiten der Trennkontaktanordnungen werden im folgenden anhand der Figuren 2 bis 5 näher erläutert.

Der bewegbare Trennkontaktblock 16 weist einen aus isolierenden Kunststoff bestehenden Trennkontaktträger 20 auf, der eine Zusammenfassung mehrerer isolierender Gehäuse 21 von Kontakteinheiten 22 darstellt. Der Trennkontaktblock 16 ist vierpolig ausgebildet und besitzt je Pol vier isolierende Gehäuse 21, so daß der Trennkontaktblock 16 sechzehn Kontakteinheiten 22 umfassen kann. Der Trennkontaktträger 20 bildet somit ein für eine Vielzahl von Aufgaben verwendbares Teil, das nach Bedarf eine entsprechende Anzahl von Kontakteinheiten 22 aufweisen kann. Die Figuren 2 und 3 lassen erkennen, daß in vier parallelen Reihen entsprechend der vierpoligen Ausführung je vier isolierende Gehäuse 21 zu dem einstückigen Trennkontaktträger 20 zusammengefaßt sind.

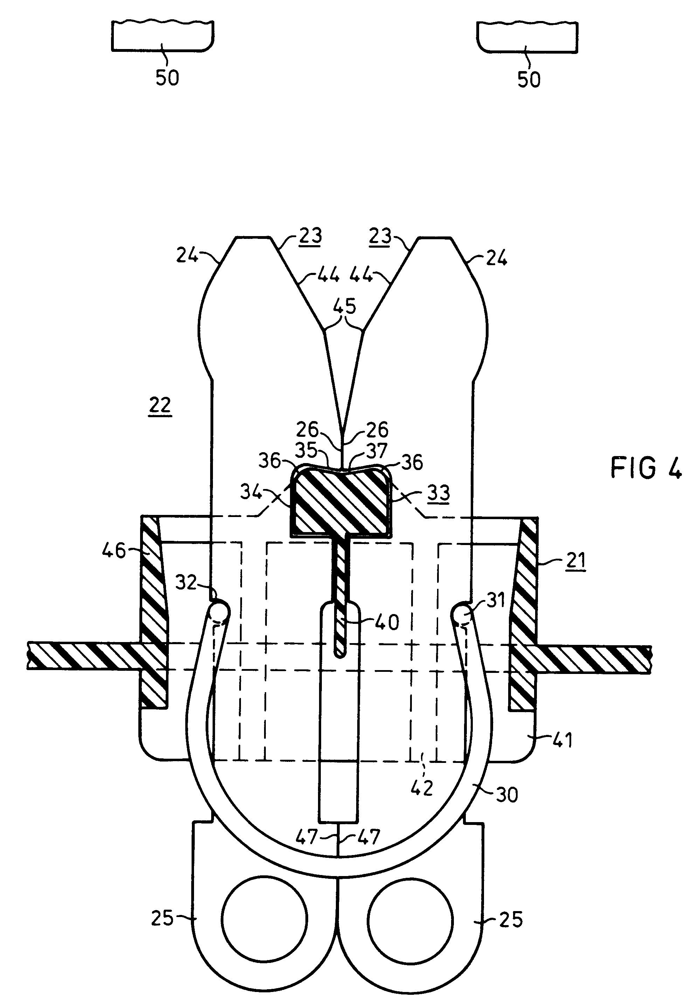

Eine der Kontakteinheiten 22 wird nun näher beschrieben. Zunächst wird auf die Figur 4 Bezug genommen, welche eine der Kontakteinheiten im Ruhezustand, d. h. außer Eingriff mit dem zugehörigen Gegenkontakt, zeigt. Die Kontakteinheit 22 umfaßt neben dem bereits erwähnten isolierenden Gehäuse 21 zwei gleiche, spiegelsymmetrisch angeordnete Kontakthebel 23, die als Stanzteile hergestellt sind. An ihrem einen Ende besitzen die Kontakthebel 23 eine zylindrisch geformte Kontaktfläche 24 und am gegenüberliegenden Ende eine Anschlußkontaktfläche 25. Nahe dem mit der Kontaktfläche 24 versehenen Ende besitzt jeder der Kontakthebel 23 eine Anlagefläche 26, während am gegenüberliegenden Ende d. h. nahe der Anschlußkontaktfläche 25 eine weitere Anlagefläche 27 vorgesehen ist. Eine aus Federdraht bestehende Biegefeder 30 besitzt eine etwa U-förmige Gestaltung und greift mit abgewinkelten Enden 31 in eine Ausnehmung 32 an der Außenseite jedes der Kontakthebel 23. In dem dargestellten Ruhezustand liegen daher die Kontakthebel 23 mit einer durch die Biegefeder 30 bereitgestellten Vorspannkraft an ihren Anlageflächen 26 und 27 aneinander an. Dabei übergreifen die Kontakthebel 23 mit einem gewissen Spiel ein zu dem isolierenden Gehäuse 21 gehörendes Widerlager 33, das je zur Hälfte in eine Ausnehmung 34 jedes der Kontakthebel 23 eingreift. Die Ausnehmungen 34 besitzen eine etwa rechteckige Gestalt, wobei jedoch an der dem kontaktseitigen Ende des Kontakthebels zugewandten Seite zur Bildung einer Hinterschneidung eine winklig angeordnete Begrenzungsfläche 35 vorgesehen ist. Das Widerlager 33 ist den Ausnehmungen 34 einschließlich der Hinterschneidung angepaßt geformt. Eine nur geringe Flächenpressung wird dadurch erreicht, daß das Widerlager 33 an seiner den winkligen Flächen 35 der Ausnehmungen 34 zugewandten Seite nach außen gewölbte zylindrischen Teilflächen 36 und eine mittige Teilfläche 37 mit gegensinniger Wölbung aufweist.

An seiner den Anschlußkontaktflächen 25 zugewandten Seite geht von dem Widerlager 33 eine Rippe 40 aus, die ebenso wie das Widerlager 33 gegenüberliegende Seitenwände des Gehäuses 21 miteinander verbindet. Eine der Seitenwände 41 ist in der Figur 4 gezeigt. Sie besitzt zwei parallele Führungsleisten 42, auf denen die Kontakthebel 23 aufliegen. Die gegenüberliegende, in der Figur 4 nicht sichtbare, jedoch näher aus der Figur 3 ersichtliche Seitenwand 43 steht der Seitenwand 41 mit solchem Abstand gegenüber, daß nicht nur die Kontakthebel 23, sondern auch die auf ihnen aufliegende Biegefeder 30 Platz findet. An den Kontakthebeln kann daher trotz des Einbaus in das Gehäuse 21 Luft entlangströmen.

An ihren kontaktseitigen Enden besitzen die Kontakthebel 23 je eine Schrägfläche 44, die spitzwinklig zur Längsrichtung der Kontakthebel 23 verlaufend und der Kontaktfläche 24 gegenüberliegend angeordnet ist. Wie die Figur 4 zeigt, entsteht auf diese Weise durch die spiegelbildliche Anordnung der Kontakthebel 23 in Verbindung mit einer Knickstelle 45 im Verlauf der Schrägfläche 44 eine trichterartige Öffnung. Diese wird beim Bestücken des in den Figuren 2 und 3 gezeigten Trennkontaktträgers 20 mit Kontakthebeln in der Weise benutzt, daß ein Paar von Kontakthebeln 23 mit der zugehörigen Biegefeder 30 in ein isolierendes Gehäuse 21 derart eingeführt wird, daß die Rippe 40 zwischen die Kontakthebel 23 gelangt und die Kontakthebel 23 aufgrund der Schrägflächen 44 gespreizt werden. Eine weitere Spreizung erfolgt dann beim Auftreffen des Widerlagers 33 auf die Schrägflächen 44. In der Endstellung schnappen die Kontakthebel 23 zusammen und umschließen entsprechend der Figur 4 mit ihren Ausnehmungen 34 das Widerlager 33. Wie die Figur 4 zeigt, sind die Stirnwände 46 des isolierenden Gehäuses 21 in solchem Abstand angeordnet, daß für die beschriebene Spreizung der Kontakthebel 23 bei der Montage ausreichend Raum vorhanden ist.

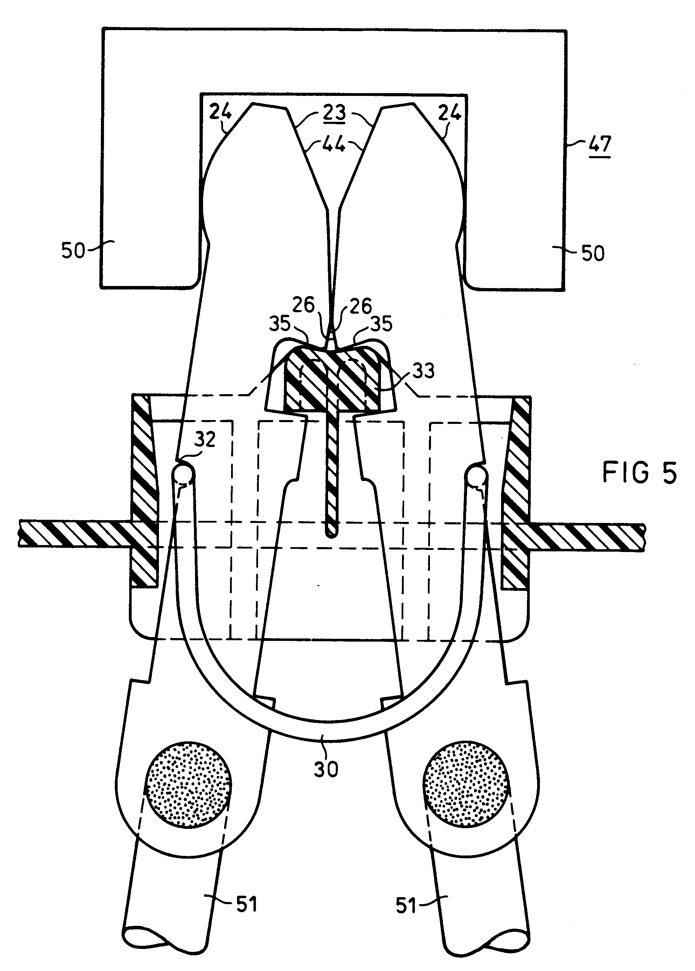

Nachstehend werden die Vorgänge beschrieben, die beim Eingreifen der Kontakthebel 23 in die Gegenkontaktsrücke auftreten. Wie die Figur 2 in Verbindung mit der Figur 5 zeigt, sind zwei parallele Gegenkontaktstücke 50 vorgesehen, die durch die Schenkel einer U-förmigen Profilschiene 47 gebildet sind. Eine Wälzbewegung der Kontakthebel 23 im Bereich der Anlageflächen 26 ermöglicht eine Verringerung des Abstandes der Kontaktflächen 24 gegenüber der Ruhestellung gemäß der Figur 4 um ein solches Maß, daß die Kontaktflächen 24 zur Anlage an den Gegenkontaktstücken 50 gelangen können. Die gleichzeitige Auffederung der Biegefeder 30 bestimmt somit die Kontaktkraft im Bereich der Kontaktflächen 24. Die Kraft der Biegefeder 30 wird als Kontaktkraft praktisch vollständig wirksam.

Wie anhand der Figuren 4 und 5 ferner zu erkennen ist, bestimmt die relative Lage der Anlageflächen 26 zu den Kontaktflächen 24 und der Abstand der Ausnehmungen 32 für den Eingriff der Biegefeder 30 zu den Anlageflächen 26 das für die Kontaktkraft maßgebliche Hebelverhältnis. Ferner hat die Länge der Kontakthebel 23 zwischen den Anlageflächen 26 und den Anschlußkontaktflächen 25 einen Einfluß auf die Kontaktkraftverstärkung beim Fließen großer Ströme.

Mit den Anschlußkontaktflächen 25 der Kontakthebel 23 können biegsame Leiter in geeigneter Weise verbunden sein. Geeignet sind beispielsweise aus dünnen Kupferdrähten geflochtene Litzen oder aus biegsamen Folien geschichtete Bänder oder Litzen 51 (Figur 5), die mit den Anschlußkontaktflächen 25 in geeigneter Weise, z. B. durch Löten, Schweißen, Quetschen oder ähnliche Verfahren dauerhaft zu verbinden sind. Diese biegsamen Leiter 51 stellen die Verbindung zwischen den Kontakthebeln und den auf dem Geräteträger befindlichen Schaltgeräten her.

## Patentansprüche

1. Trennkontaktanordnung (16) für einen entlang Führungsteilen verschiebbar angeordneten Geräteträger (1) zur lösbaren Verbindung auf dem Geräteträger (1) befindlicher Schaltgeräte mit ortsfest angeordneten einspeisenden und/oder abgehenden Leitern, mit folgenden Merkmalen:
- Je Phase ist wenigstens eine bewegbare Kontakteinheit (22), bestehend aus einem isolierenden Gehäuse (21) und zwei in dem Gehäuse relativ zueinander schenkbar angeordneten Kontakthebeln (23) , vorhanden;
- die Kontakthebel (23) sind im wesentlichen parallel zueinander angeordnet und besitzen an jeweils einem Enden eine, bezogen auf die parallele Stellung der Kontakthebel (23), außenliegend angeordnete Kontaktfläche (24) und am gegenüberliegenden Ende eine Anschlußkontaktfläche (25);
- für das Zusammenwirken mit den Kontakthebeln (23) sind zwei ortsfeste und parallel zueinander angeordnete Gegenkontaktstücke (50) vorgesehen, zwischen welche die Kontakthebel (23) einführbar sind,
**gekennzeichnet durch** folgende weitere Merkmale:
- Jeder Kontakthebel (23) besitzt eine etwa rechteckige Ausnehmung (34);
- an dem isolierenden Gehäuse (21) der Kontakteinheit (22) ist ein Widerlager (33) zum Eingreifen in die Ausnehmungen (34) der beiden Kontakthebel (23) vorgesehen und
- die Kontakthebel (23) sind durch eine nur an den Kontakthebeln (23) abgestützte Feder (30) unter Spreizung der Kontaktflächen (24) nach außen gegeneinander vorgespannt.

2. Trennkontaktanordnung nach Anspruch 1, **dadurch gekennzeichnet**, daß die parallelen Kontakthebel (23) nahe ihren Enden Anlageflächen (26) zur gegenseitigen Abstützung im Ruhestand besitzen und daß im Ruhestand zwischen dem Widerlager (33) und den Ausnehmungen (34) in Spiel vorhanden ist.

3. Trennkontaktanordnung nach einem der vorangehenden Ansprüche, **dadurch gekennzeichnet**, daß die Ausnehmung (34) jedes Kontakthebels (23) an ihrer dem kontaktseitigen Ende des Kontakthebels (23) zugewandten Seite zur Bildung einer Hinterschneidung durch eine winklig angeordnete Fläche (33) begrenzt ist und daß das gehäuseseitige Widerlager (33) der Ausnehmung (34) einschließlich der Hinterschneidung angepaßt gestaltet ist.

4. Trennkontaktanordnung nach Anspruch 3, **dadurch gekennzeichnet**, daß die mit den winklig angeordneten Flächen (35) der Kontakthebel (23) zusammenwirkende Seite des Widerlagers (33) von zwei nach außen gewölbten zylindrischen Teilflächen (36) sowie einer diese Teilflächen (36) verbindenden mittigen Teilfläche (37) mit gegensinniger Wölbung begrenzt ist.

5. Trennkontaktanordnung nach einem der vorangehenden Ansprüche, **dadurch gekennzeichnet**, daß jeder Kontakthebel (23) nahe seinem mit der Kontaktfläche (24) versehenen Ende anschließend an die dort vorgesehene Anlagefläche (26) eine spitzwinklig zu der Längsrichtung des Kontakthebels (23) stehende Schrägfläche (44) besitzt.

6. Trennkontaktanordnung nach einem der vorangehenden Ansprüche, **dadurch gekennzeichnet**, daß an dem isolierenden Gehäuse (21) ausgehend von dem Widerlager (33) eine sich in Richtung der Anschlußkontaktflächen (25) der Kontakthebel (23) erstreckende Rippe (40) angeordnet ist.

7. Trennkontaktanordnung nach Anspruch 6, **dadurch gekennzeichnet**, daß das Widerlager (33) und die hiervon ausgehende Rippe (40) einstückig mit dem Gehäuse (21) der Kontakteinheit (22) als Verbindung paralleler, die Kontakthebel (23) seitlich führender Gehäusewände (41, 43) ausgebildet sind.

8. Trennkontaktanordnung nach einem der vorangehenden Ansprüche, **dadurch gekennzeichnet**, daß wenigstens die eine der Gehäusewände (41) mit etwa parallel zur Längsachse der Kontakthebel (23) verlaufend angeordneten Führungsleisten (42) für die Kontakthebel (23) versehen ist, die nur einen Teil der Breitseiten der Kontakthebel (23) bedecken.

9. Trennkontaktanordnung nach Anspruch 8, **dadurch gekennzeichnet**, daß die den Führungsleisten (42) gegenüberliegende Gehäusewand (43) eben gestaltet und den Führungsleisten (42) in einem Abstand angeordnet ist, welcher der Dicke der Kontakthebel (23) einschließlich der an ihnen anliegenden Feder (30) entspricht.

10. Trennkontaktanordnung nach einem der vorangehenden Ansprüche, **dadurch gekennzeichnet**, daß als Stromzufuhr zu den Kontakthebeln (23) an der Anschlußkontaktfläche (25) jedes Kontakthebels (23) ein biegsamer Leiter (51) befestigt ist.

11. Trennkontaktanordnung nach einem der vorangehenden Ansprüche, **dadurch gekennzeichnet**, daß die isolierenden Gehäuse (21) für mehrere Kontakteinheiten (22) zu einem einstückigen Trennkontaktträger (20) zusammengefaßt sind.

12. Trennkontaktanordnung nach einem der vorangehenden Ansprüche, **dadurch gekennzeichnet**, daß die ortsfesten Gegenkontaktstücke (46) durch eine U-förmige Profilschiene (47) gebildet sind, deren innere Seitenflächen mit den Kontaktflächen (24) der Kontakthebel (23) zusammenwirken.

## Claims

1. Isolating contact arrangement (16) for an apparatus carrier (1), which is arranged such that it can be displaced along guide portions, for disconnectable connection of switching apparatus, located on the apparatus carrier (1), to fixedly arranged feeding and/or outgoing conductors, having the following features:
- at least one movable contact unit (22), consisting of an insulating housing (21) and two contact levers (23), which are arranged in the housing such that they can be swung relative to each other, is provided per phase;
- the contact levers (23) are arranged so as to be substantially parallel to each other and have, in each case, at one end a contact face (24) which is arranged externally in relation to the parallel position of the contact levers (23), and at the opposite end a connecting contact face (25);
- provided for cooperation with the contact levers (23) there are two counter-contact pieces (50) which are arranged in a fixed manner and so as to be parallel to each other and between which it is possible to introduce the contact levers (23), characterised by the following further features:
- each contact lever (23) has a substantially rectangular recess (34);
- provided on the insulating housing (21) of the contact unit (22) there is an abutment (33) for engagement into the recesses (34) of the two contact levers (23); and
- the contact levers (23) are prestressed towards each other by means of a spring (30), which is stayed just on the contact levers (23), with the contact faces (24) spreading out outwards.

2. Isolating contact arrangement according to claim 1, characterised in that the parallel contact levers (23) close to their ends have bearing faces (26) for mutual support in the state of rest and in that in the state of rest there is clearance between the abutment (33) and the recesses (34).

3. Isolating contact arrangement according to one of the preceding claims, characterised in that the recess (34) of each contact lever (23) on its side facing the end of the contact lever (23) on the contact side is delimited by means of a face (33) (sic), which is arranged at an angle, so as to form an undercut and in that the abutment (33) on the housing side is shaped so as to be adapted to the recess (34) including the undercut.

4. Isolating contact arrangement according to claim 3, characterised in that the side of the abutment (33) cooperating with the faces (35) of the contact levers (23) that are arranged at an angle is delimited by two cylindrical partial faces (36) which are curved outwards and also by a central partial face (37) which connects these partial faces (36) and is curved in opposing directions.

5. Isolating contact arrangement according to one of the preceding claims, characterised in that each contact lever (23) close to its end provided with the contact face (24), following on from the bearing face (26) provided there, has an inclined face (44) which is at an acute angle relative to the longitudinal direction of the contact lever (23).

6. Isolating contact arrangement according to one of the preceding claims, characterised in that a rib (40), which extends in the direction of the connecting contact faces (25) of the contact levers (23), is arranged on the insulating housing (21) in a manner such that it issues from the abutment (33).

7. Isolating contact arrangement according to claim 6, characterised in that the abutment (33) and the rib (40) issuing therefrom are formed in one piece with the housing (21) of the contact unit (22) and as a connection of parallel housing walls (41, 43) which laterally guide the contact levers (23).

8. Isolating contact arrangement according to one of the preceding claims, characterised in that at least one of the housing walls (41) is provided with guide strips (42) for the contact levers (23), which guide strips (42) are arranged so as to extend substantially parallel to the longitudinal axis of the contact levers (23) and cover just a portion of the broad sides of the contact levers (23).

9. Isolating contact arrangement according to claim 8, characterised in that the housing wall (43) which lies opposite the guide strips (42) is shaped so as to be planar and is arranged at a distance from the guide strips (42) that corresponds to the thickness of the contact levers (23) including the spring (30) resting against them.

10. Isolating contact arrangement according to one of the preceding claims, characterised in that a flexible conductor (51) is secured to the connecting contact face (25) of each contact lever (23) as a current supply to the contact levers (23).

11. Isolating contact arrangement according to one of the preceding claims, characterised in that the insulating housings (21) for several contact units (22) are combined to form a one-piece isolating contact carrier (20).

12. Isolating contact arrangement according to one of the preceding claims, characterised in that the fixed counter-contact pieces (46) are formed by a U-shaped profiled rail (47), the inner side faces of which cooperate with the contact faces (24) of the contact levers (23).

## Revendications

1. Dispositif à contacts de coupure (16) pour un support d'appareils (1) disposé de manière à être déplaçable le long de pièces de guidage, pour établir la liaison amovible d'appareils de coupure situés sur le support d'appareils (1), avec des conducteurs fixes d'alimentation et/ou de départ, présentant les particularités suivantes :
- pour chaque phase il est prévu au moins une unité de contact mobile (22), constituée par un boîtier isolant (21) et deux leviers de contact (23) disposés de manière à pouvoir basculer l'un par rapport à l'autre dans le boîtier;
- les leviers de contact (23) sont disposés essentiellement parallèlement l'un à l'autre et possèdent respectivement, au niveau d'une extrémité, une surface de contact (24), située à l'extérieur par rapport à la position parallèle des leviers de contact (23), et, sur l'extrémité opposée, une surface de contact de raccordement (25);
- pour la coopération avec les leviers de contact (23), sont prévues deux pièces de contact antagonistes (50), qui sont fixes et parallèles entre elles et entre lesquelles peuvent être introduits les leviers de contact (23), caractérisé par les caractéristiques suivantes :
- chaque levier de contact (23) possède un évidement approximativement de forme rectangulaire (34);
- sur le boîtier isolant (21) de l'unité de contact (22) est prévue une butée (33) destinée à s'engager dans les évidements (34) des deux leviers de contact (23), et
- les leviers de contact (23) sont précontraints l'un vers l'autre au moyen d'un ressort (30), qui prend appui uniquement sur les leviers de contact (23), moyennant un écartement des surfaces de contact (24) en direction de l'extérieur.

2. Dispositif à contacts de coupure suivant la revendication 1, caractérisé par le fait que les leviers de contact parallèles (23) possèdent, à proximité de leurs extrémités, des surfaces d'application (26) pour un appui réciproque à l'état de repos, et qu'à l'état de repos, un jeu est présent entre la butée (33) et les évidements (34).

3. Dispositif à contacts de coupure suivant l'une des revendications précédentes, caractérisé par le fait que l'évidement (34) de chaque levier de contact (23) est limité, sur son côté, tourné vers l'extrémité, située du côté du contact, du levier de contact (23), pour la formation d'une partie en contre-dépouille, par une surface oblique (33), et que la butée (33), située sur le boîtier, est agencée d'une manière adaptée à l'évidement (34), y compris la partie en contre-dépouille.

4. Dispositif à contacts de coupure suivant la revendication 3, caractérisé par le fait que le côté de la butée (33), qui coopère avec les surfaces obliques (35) des leviers de contact (23), est limité par deux surfaces partielles cylindriques (36), cintrées vers l'extérieur, et par une surface partielle médiane (34), qui relie ces surfaces partielles (36) et possède un cintrage dirigé en sens opposé.

5. Dispositif à contacts de coupure suivant l'une des revendications précédentes, caractérisé par le fait que chaque levier de contact (23) comporte, à proximité de son extrémité pourvue de la surface de contact (24), et à la suite de la surface d'application (26) prévue en cet endroit, une surface oblique (44), qui fait un angle aigu par rapport à la direction longitudinale du levier de contact (23).

6. Dispositif à contacts de coupure suivant l'une des revendications précédentes, caractérisé par le fait qu'une nervure (40), qui s'étend en direction des surfaces de contact de raccordement (25) des leviers de contact (23), est disposée sur le boîtier isolant (21) et s'étend à partir de la butée (33).

7. Dispositif à contacts de coupure suivant la revendication 6, caractérisé par le fait que la butée (33) et la nervure (40), qui s'étend à partir de cette butée, sont réalisées d'un seul tenant avec le boîtier (21) de l'unité de contact (22), sous la forme d'une liaison de parois parallèles (41,43) du boîtier qui guident latéralement les leviers de contact (23).

8. Dispositif à contacts de coupure suivant l'une des revendications précédentes, caractérisé par le fait qu'au moins l'une des parois (41) du boîtier comporte, pour les leviers de contact (23), des barrettes de guidage (42), qui sont approximativement parallèles à l'axe longitudinal des leviers de contact (23) et qui recouvrent seulement une partie des côtés larges des leviers de contact (23).

9. Dispositif à contacts de coupure suivant la revendication 8, caractérisé par le fait que la paroi (43) du boîtier, qui est située en vis-à-vis des barrettes de guidage (42), est plane et est disposée à une distance des barrettes de guidage (42), qui correspond à l'épaisseur des leviers de contact (23) y compris le ressort (30) appliqué contre ces leviers.

10. Dispositif à contacts de coupure suivant l'une des revendications précédentes, caractérisé par le fait qu'un conducteur flexible (51) est fixé en tant qu'élément d'alimentation en courant aboutissant aux leviers de contact (23), sur la surface de contact de raccordement (25) de chaque levier de contact (23).

11. Dispositif à contacts de coupure suivant l'une des revendications précédentes, caractérisé par le fait que les boîtiers isolants (21) pour plusieurs unités de contact (22) sont réunis pour former un support monobloc de contacts de coupure (20).

12. Dispositif à contacts de coupure suivant l'une des revendications précédentes, caractérisé par le fait que les sièges de contact antagonistes fixes (46) sont formés par des rails profilés (47) en forme de U, dont les surfaces latérales intérieures coopèrent avec les surfaces de contact (24) des leviers de contact (23).
